# EUROPÄISCHE PATENTANMELDUNG

(11) **EP 1 547 978 A2**
(43) Veröffentlichungstag der Anmeldung: **29.06.2005**
(21) Anmeldenummer: 04022629.2
(22) Anmeldetag: 23.09.2004
(51) Int. Cl.: C02F 1/32

(54) **Wasseraufbereitungsvorrichtung**

(30) Priorität: 23.12.2003 DE 10361459; 08.06.2004 DE 10402778
(71) Anmelder: Blomeier, Maximilian, 50674 Köln (DE); Wilhelmy, Karl-Heinz, 50997 Köln (DE); Lülsdorf, Detlef, 50931 Köln (DE)
(72) Erfinder: Blomeier, Maximilian, 50674 Köln (DE); Wilhelmy, Karl-Heinz, 50997 Köln (DE); Lülsdorf, Detlef, 50931 Köln (DE)
(74) Vertreter: Kayser, Martin, Dr.

(57) **Zusammenfassung**

Die Erfindung bezieht sich auf eine Wasseraufbereitungsvorrichtung (60) bestehend aus einer Lichtquelle (62) aussendet, einer kaskadenförmigen Wasserführung (64) die derart angeordnet ist, dass über die Wasserführung geleitetes Wasser mit von der Lichtquelle (62) ausgesendetem Licht bestrahlt wird, wobei die Dosierung der UV-Strahlung und die Anordnung der Lichtquelle (62) zur Wasserführung (64) derart ausgewählt sind, dass Mikroorganismen im Wasser abgetötet werden. Weiterhin bezieht sich die Erfindung auf eine Wasserfiltervorrichtung (40) und eine Wasseraufbereitungsanlage (90).

## Beschreibung

Die vorliegende Erfindung betrifft eine Wasseraufbereitungsanlage, die eine Wasserfiltervorrichtung und eine damit verbundene Wasseraufbereitungsvorrichtung aufweist. Die beiden Vorrichtungen sind ebenfalls Gegenstand der Erfindung und werden jeweils einzeln beansprucht.

Die Aufbereitung von Wasser ist zum einen für Brauchwasser und Wasser, das in Teichen oder Aquarien eingesetzt wird sowie insbesondere für die Bereitstellung von Trinkwasser notwendig. Die vorliegende Erfindung bezieht sich allgemein auf die Aufbereitung von Wasser und soll nicht auf einen der genannten Bereiche festgelegt sein. Ein wesentliches Einsatzgebiet der erfindungsgemäßen Vorrichtungen ist aber die Aufbereitung von Oberflächenwasser zur Bereitstellung von Trinkwasser, weswegen die nachfolgende Beschreibung auf diesem Einsatzgebiet aufbaut.

Eine moderne Wasseraufbereitung soll Trinkwasser liefern, das qualitativ einem natürlichen Trinkwasser entspricht. In einer Trinkwasseraufbereitungsanlage wird Rohwasser bzw. Schmutzwasser prozeßmässig mit physikalischen, biologischen und chemischen Wirkmechanismen so behandelt, dass am Ende der Aufbereitung Trinkwasser entsprechend den geforderten Vorgaben zur Verfügung steht. Die Aufbereitung von Trinkwasser ist nicht gleichzusetzen mit der Aufbereitung von Prozesswasser, bei der ein Wasser industriellen Bedürfnissen angepasst wird. Eine naturnahe Trinkwasseraufbereitung sollte sich an den Prozessen orientieren, die auch in der Natur zur Reinigung des Wassers ablaufen. Dabei lassen sich im Wesentlichen drei Verfahrensschritte erkennen, nämlich die Oxidation, die Filtration und pozessbegleitende Hygienisierung.

Insbesondere das Problem der Keimfreiheit spielt in Regionen mit Wasserknappheit, wie beispielsweise im Mittelmeerraum oder in Afrika, eine erhebliche Rolle, so dass die übliche Nachbehandlung des jeweils an der Zapfstelle zur Verfügung stehenden Trinkwassers mit Hilfe eines Aktivkohlefilters nur dann ausreichend ist, wenn das gefilterte Wasser anschließend abgekocht wird. Aktivkohle hat auch den Nachteil, das Bakterien darin gute Wachstumsbedingungen vorfinden, so dass eine starke Vermehrung der im Filter zurückhaltenden ggf. gesundheitsschädlichen Bakterien zu befürchten ist, was den Einsatz dieses Filtermaterials für die Trinkwasseraufbereitung einschränkt bzw. verhindert.

Ein weiteres Problem bekannter Wasseraufbereitungsanlagen ist, dass diese einen hohen Energiebedarf aufweisen, und nur von geschultem Personal bedienbar sind. Dies ist gerade im Bereich von Krisengebieten, Flüchtlingslagern oder nach Naturkatastrophen oftmals schwierig. Es ist zwar kurzfristig möglich, mit Hilfe von Chemikalien, Membranverfahren und Filterverfahren aus nahezu jedem Rohwasser Trinkwasser zu gewinnen, jedoch ist dadurch eine langfristige Versorgung mit Trinkwasser nicht gewährleistet.

Eine Vorrichtung zur hygienischen Aufbereitung von Flüssigkeiten zeigt beispielsweise die DE 38 28 026 A1. Bei dieser fließt das zu reinigende Wasser durch Aktivkohlefilter und wird dabei vor Eintritt in die Aktivkohlefilter mit einer keimtötenden UV-Strahlung bestrahlt, was die Gefahr eines übermäßigen Keimwachstums im Bereich der Aktivkohlefilter ausschalten soll. In der gezeigten Vorrichtung wird das Wasser von oben in einen Behälter geleitet, fließt dann durch die Aktivkohlefilter nach unten und steigt durch ein Rohr, in dem sich eine UV-Lampe befindet, wieder auf, um dann über einen Auslass ausgeleitet zu werden. Ein Nachteil der Vorrichtung besteht darin, dass die Ausbeute des keimtötenden Effektes nur gering sein kann, da das UV-Licht bzw. die UV-Strahlung die verschmutzte Flüssigkeit nicht vollständig durchstrahlen kann. Dies deshalb, weil Partikel, die sich hinter anderen Partikeln sozusagen im Schatten des UV-Lichtes befinden, nicht abgetötet werden.

Auch die DE 38 40 276 A1 zeigt eine Vorrichtung zur Behandlung von Trinkwasser. Diese weist zwei hintereinander geschaltete Behandlungskammern auf, die drucklos durchströmt werden, wobei die erste Behandlungskammer als Filterkammer ausgebildet ist und die zweite Behandlungskammer durch die Anordnung eines eingetauchten UV-Strahlers als Entkeimungskammer ausgebildet ist. Die Filterkammer ist vorzugsweise mit Aktivkohle gefüllt, wodurch auch Chlor aus dem Wasser entfernt wird. Bei dieser Vorrichtung besteht der wesentliche Nachteil darin, dass sie verhältnismäßig große Abmessungen aufweist und sich die Aktivkohlefilter, wie bereits oben ausgeführt, mit der Zeit mit Keimen zusetzen. Dies wird insbesondere dadurch begründet, dass die UV-Bestrahlung erst nach der Filtration erfolgt. Grundsätzlich ist es schwierig, Aktivkohlefilter schnell und einfach zu reinigen. Außerdem ergibt sich auch bei diesem Ausführungsbeispiel, dass sich das UV-Licht in einen verhältnismäßig großen Behälter eingestrahlt wird, wodurch wiederum nicht alle Keime erreicht werden können.

Die Aufgabe der vorliegenden Erfindung besteht darin, Vorrichtungen für eine Aufbereitung von Wasser zu schaffen, die zum einen sehr effizient wirken, und zum anderen verhältnismäßig geringe Abmessungen aufweisen können.

Die oben genannten Nachteile sollen vermieden werden. Es sollen eine Vorrichtung zur Entkeimung des Wassers, eine Vorrichtung zur Filtration des Wassers und eine Wasseraufbereitungsanlage geschaffen werden, die jeweils einen maximalen Reinheitsgrad gewährleisten. Wesentlich ist auch, dass die Wasseraufbereitungsanlage möglichst wenig Energie benötigt und der Betrieb mit einfachsten Mitteln gewährleistet werden kann, so dass auch ungeübte, nicht fachkundige Benutzer die Anlage bedienen können.

Erfindungsgemäß wird die Aufgabe gelöst durch eine Wasseraufbereitungsvorrichtung mit
- einer Lichtquelle, die ultraviolettes Licht aussendet,
- einer kaskadenförmigen Wasserführung, die derart angeordnet ist, dass über die Wasserführung geleitetes Wasser mit von der Lichtquelle ausgesendetem Licht bestrahlt wird,
wobei die Dosierung und Wellenlänge der UV-Strahlung und die Anordnung der Lichtquelle zur Wasserführung derart ausgewählt sind, dass Mikroorganismen im Wasser abgetötet werden.

Weiterhin wird die Aufgabe durch eine Wasserfiltervorrichtung für eine Wasseraufbereitungsanlage gelöst mit:
a) einem mit einem Boden, einem Deckel und einem im Bereich des Bodens angeordneten Zulauf,
b) einem länglichen Filterelement für das Zurückhalten von Grobstoffen in dem Gehäuse, mit einem Rohr, das verbunden ist mit einem hohlen Filterkörper, der gebildet ist aus
   - einem innen angeordneten, einen Hohlraum ausbildenden und mit innen angeordneten, einen Hohlraum ausbildenden und mit dem Rohr verbundenen Tragegerüst,
   - einer Grundschicht aus relativ grobkörnigem Material, dass das Tragegerüst umgibt und mit diesem verbunden ist,
   - einer Außenschicht aus relativ feinkörnigem Material, das die Grundschicht umgibt und mit dieser verbunden ist,
   so dass die Flüssigkeit von außen in den Filterkörper und dann durch das Rohr abfließen kann, wobei sich das Rohr durch eine Öffnung im Deckel erstreckt,
c) einem Ablauf oberhalb des Deckels,
   derart, dass Schmutzwasser über den Zulauf in das Gehäuse eingeleitet werden kann, sich dann Schwebstoffe auf dem Boden absetzen können und das Wasser anschließend durch das Filterelement zum Ablauf aufsteigen kann.

Die Aufgabe wird ebenfalls gelöst durch eine Wasseraufbereitungsanlage, die die oben genannte Aufbereitungsvorrichtung und die oben genannte Wasserfiltervorrichtung beinhaltet, wobei das Schmutzwasser zunächst die Wasserfiltervorrichtung und dann die Wasseraufbereitungsvorrichtung durchströmt.

Die erfindungsgemäße Wasserfiltervorrichtung weist also prinzipiell ein Absetzbecken auf, in dem sich die Schmutzpartikel zunächst absetzen können bevor das Schmutzwasser dann durch das längliche Filterelement aus dem Gehäuse herausgedrückt wird. Der Deckel, in dem sich das Filterelement befindet, ist wasserdicht ausgeführt, so dass das aufsteigende Wasser lediglich durch das Filterelement strömen kann. Ein wesentlicher Vorteil der Wasserfiltervorrichtung besteht darin, dass eine Pumpe das Schmutzwasser zunächst auf ein Niveau oberhalb des Filterelementes pumpt, von wo das Schmutzwasser dann durch die Leitung zum Zulauf und dann in das Absetzbecken gelangt. Die Pumpe für einen Durchsatz von 1-3 m³ / benötigt lediglich 50W. Je nach Anordnung der Wasserfiltervorrichtung ist es auch möglich, auf die Pumpe zu verzichten. Dies ist z.B. dann der Fall, wenn sich die Wasserfiltervorrichtung in Verbindung mit einem Bach in hügeligem Gelände verwendet wird. Auch kann Sonnen-, Wind- und Strömungsenergie (Wasserrad) sowie Muskelkraft zum Antrieb der Pumpe genutzt werden.

Das eingesetzte erfindungsgemäße Filterelement stellt eine Abkehr von den bekannten Filterelementen dar. Erfindungsgemäß sind nämlich die Filterschichten genau andersherum als üblich angeordnet. Das Wasser bzw. die Flüssigkeit passiert zunächst die feinkörnige Außenschicht und passiert erst dann die grobkörnige Grundschicht, um schließlich durch den Tragekörper in das Innere des Rohres zu gelangen und aus diesem abgeleitet zu werden. Vorteilhafterweise weist die Außenschicht eine Körnung von unter 2 mm, insbesondere 0,3 mm bis 1,3 mm auf, während die Grundschicht aus Splitmaterial mit einer Körnung von 6 mm bis 8 mm gebildet ist.

Eine der Außenschicht ähnliche Körnung wird beispielsweise für die Beschichtung von Bodenplatten verwendet und es hat sich dabei gezeigt, dass eine solche Schicht durch Feinstpartikel und Abrieb von beispielsweise LKW-Reifen nicht zugesetzt wird. In Langzeitversuchen hat sich gezeigt, dass das erfindungsgemäße Filterelement auch bei einem Langzeiteinsatz über viele Jahre durchlässig bleibt.

Split ist für die Grundschicht deshalb besonders geeignet, weil durch die scharfen Kanten und unregelmäßigen Formen eine optimale Permeabilität erreicht wird und die Flüssigkeit schnell und effektiv in das Innere des Filterkörpers abgeleitet werden kann.

In einer ersten Ausführungsvariante weist ein Filterelement eine Länge von etwa 285 mm bis 760 mm auf, wobei die Länge des Filterkörpers etwa 165 mm bis 320 mm und die Länge der überstehenden Rohre entsprechend bis zu etwa 595 mm beträgt. Die angegebenen Längen sind auf eine sich in Längsrichtung des Rohres und des Filterkörpers erstreckende Längsachse bezogen. Die Schichtdicke der Außenschicht und die Schichtdicke der Grundschicht können je nach Anforderung variieren, es hat sich aber gezeigt, dass ein Verhältnis von 1 zu 3 bis 1 zu 4 der Außenschicht zur Grundschicht günstig ist. Beispielsweise kann die Schichtdicke der Außenschicht 5 mm und die Schichtdicke der Grundschicht 15 mm bis 20 mm betragen.

Das Rohr kann einen Innendurchmesser vom 62 mm und einen Außendurchmesser von 65 mm aufweisen und z.B. aus Kunststoff oder Metall gebildet sein. An das Rohr schließt sich das Tragegerüst an, das sich in den Filterkörper hinein erstreckt. Dieses kann vorzugsweise durch einzelne Metall- oder Kunststoffstäbe gebildet sein, die aus einem Netz mit Metall oder Kunststoff umwickelt sind.

Die angegebenen Größenordnungen sind je nach individueller Anforderung frei wählbar, die angegebenen Abmessungen sind lediglich beispielhaft zu verstehen.

Erfindungsgemäß erfolgt die Herstellung eines solchen Filterelementes in wenigen, einfach durchzuführenden Schritten. In einem ersten Schritt wird das Rohr endseitig mit dem Tragegerüst verbunden. Dies kann beispielsweise dadurch geschehen, dass das Ende des Rohres mit Metall- oder Kunststoffstäben verbunden wird, beispielsweise durch Schweißen oder Kleben. Die dann freien Enden der Stäbe können bedarfsweise miteinander verbunden werden. Anschließend werden die Stäbe mit einem Netz oder Gitter überzogen. Hier bietet sich beispielsweise ein Nylonnetz an, das nach Art eines Strumpfes über die Stäbe gezogen wird. Möglich ist aber auch ein Metallnetz, das geklebt, geschweißt oder gelötet wird.

Parallel dazu wird in einer Form, beispielsweise einer Becherform die Außenschicht ausgebildet. Es hat sich als besonders vorteilhaft erwiesen, wenn als Bindemittel für die Körner ein Epoxydharz verwendet wird. Dabei reichen 0,8 1 bis 11 Epoxydharz für das Verkleben von 25 kg Feinschicht aus. Für die Verbindung des Grobkornes bzw. des Splitmaterials reicht eine Menge Epoxydharz von etwa 0,4 bis 0,6 l aus. Epoxydharz hat den Vorteil, dass dieser während des Einsatzes des Filterelementes keiner Giftstoffe absondert. Vorzugsweise wird Epoxydharz mit einer Lebensmittelzulassung verwendet. Sobald die Außenschicht angehärtet ist, wird in die Form, in der sich schon die Außenschicht befindet, Splitmaterial hinein gegeben, bis der Boden vollständig bedeckt ist. Anschließend wird das Tragegerüst auf den bedeckten Boden gestellt und der Zwischenraum zwischen dem Tragegerüst und der Außenschicht mit grobkörnigem Material, vorzugsweise Split, das ebenfalls mit Epoxydharz versetzt ist, gefüllt. Das Netz oder Gitter verhindert dabei, dass Material in den Hohlraum eindringen kann, weiterhin ermöglicht es, dass die Grundschicht verdichtet werden kann. Nach dem Aushärten kann dann die Außenschicht von der Form getrennt werden und das Filterelement ist einsatzbereit. Vorzugsweise kann der Filterkörper eine leicht konische Form aufweisen, damit er leichter aus der Form heraus gelöst werden kann. Es hat sich weiterhin gezeigt, dass es vorteilhaft ist, wenn die dem Rohr zugewandte ringförmige Rückseite des Filterkörpers mit Hilfe von Epoxydharz und Feinkorn abgedichtet wird. Dies hat den Vorteil, dass von vorne einströmendes Wasser nicht auf der Rückseite wieder hinaus gelangen kann und weiterhin wird die Fertigung des Filterelementes dadurch erleichtert.

Anhand der erläuterten Ausführungsvariante lässt sich leicht erläutern, warum sich die nutzbare Filterfläche so deutlich vergrößert. Eine kreisförmige Öffnung mit einem Durchmesser von 65 mm weist eine Fläche von etwa 30 cm² auf. Wird in diese Öffnung ein erfindungsgemäßes Filterelement eingesteckt, kann die Außenfläche des Filterkörpers als Filterfläche genutzt werden. Dies bedeutet bei einem Außendurchmesser des Filterkörpers von durchschnittlich etwa 120 mm und einer Länge von 160 mm, dass die nutzbare Fläche etwa 715 cm² beträgt. Daraus ergibt sich ein Verhältnis von etwa 1 zu 24 zwischen der Öffnung und dem Filterelement.

Im Gegensatz zu einem gewöhnlichen flächigen Filterelement nach dem Stand der Technik weist also das erfindungsgemäße längliche Filterelement eine um ein vielfaches höhere Filterfläche auf. Würde beispielsweise anstelle des Deckels ein flächiges Filterelement eingesetzt sein, entspräche die Filterfläche exakt der Fläche des Deckels. Die Filterfläche ist also durch den Innendurchmesser bzw. den inneren Querschnitt des Gehäuses begrenzt. Bei dem erfindungsgemäßen länglichen Filterelement dagegen kann im Extremfall die gesamte Länge des Gehäuses genutzt werden, wobei als Filterfläche zum einen eine Stirnfläche des länglichen Filterelementes und zuzüglich die gesamte Umfangsfläche wirkt.

In einer vorteilhaften Weiterbildung des erfindungsgemäßen Filterelementes ist innerhalb des Rohres ein sich entlang der Längsachse erstreckender Strömungskörper angeordnet. Dieser ist durch einen Materialstreifen gebildet, der um seine Längsachse helixartig tordiert ist. Dieser Strömungskörper erstreckt sich vorteilhafterweise durch das gesamte Tragegerüst und das gesamte Rohr hindurch und ist im Querschnitt in etwa mittig angeordnet. Der Strömungskörper bewirkt, dass das turbulent herein strömende Wasser von diesem aufgrund der Helixform in eine andere Strömungsrichtung umgeleitet und gleichgerichtet wird. Dies wiederum führt dazu, dass das in den Hohlraum eindringende Wasser schneller kontrolliert und abgeleitet werden kann.

Vorteilhafterweise weist das Gehäuse einen Revisionsschacht auf, durch den das Innere des Gehäuses zugänglich ist, bzw. durch den auch die abgesetzten Schmutzpartikel entfernt werden können. Das längliche Filterelement ist schnell und einfach zu entnehmen, insbesondere dann, wenn es im Deckel mit einer möglichst einfachen Befestigungsmethode, beispielsweise mit einem Splint oder sogar nur durch Reibschluss befestigt ist. Es kann dann mit klarem Wasser durchspült werden und ist sofort wieder einsatzbereit. Aufgrund des gewählten Materials weist das Filterelement auch eine sehr lange Lebensdauer auf.

Die Leitung kann beispielsweise einen Durchmesser von etwa 150 bis 200 mm und das Gehäuse einen Durchmesser von etwa 200 mm aufweisen.

Die erfindungsgemäße Wasseraufbereitungsvorrichtung weist vorteilhafterweise eine kaskadenförmige Wasserführung auf. Dies bedeutet, dass das zu reinigende Wasser nicht wie im Stand der Technik mit einer verhältnismäßig hohen Geschwindigkeit an der Lichtquelle vorbeigeführt wird, sondern dass es aufgrund der kaskadenförmigen Wasserführung in jeder Stufe gebremst und verwirbelt wird. Somit ist die Dauer, die das Wasser mit UV-Licht bestrahlt wird, entsprechend länger.

Vorteilhafterweise ist die Lichtquelle röhrenförmig ausgeführt und ist aufrecht, also vertikal stehend angeordnet. Um diese röhrenförmige Lichtquelle, die in alle Richtungen radial UV-Licht aussendet, ist die kaskadenförmige Wasserführung hüllenförmig angeordnet. Das heißt, dass die kaskadenförmige Wasserführung vorteilhafterweise an der Innenwand eines ebenfalls röhrenförmigen Gehäuses angeordnet ist, das sich um die Lichtquelle herum erstreckt.

Zu reinigendes Wasser wird von oben möglichst über den gesamten Umfang in das Gehäuse eingeleitet. Die kaskadenförmige Wasserführung weist untereinander angeordnete Kaskadenstufen auf, die ausgehend von einem oberen Ende des Gehäuses einen jeweils geringeren Abstand zur Lichtquelle aufweisen. Das zugeführte Wasser fließt also zunächst über den gesamten Umfang die erste Kaskadenstufe auf die dann folgende zweite Kaskadenstufe, dann auf die nächste Kaskadenstufe und nähert sich dabei stetig der Lichtquelle.

Die kaskadenförmige Wasserführung hat zum einen den Vorteil, dass die Fließgeschwindigkeit des Wassers verringert wird, zum anderen wird aber vorteilhafterweise auch der zu bestrahlende Wasserfilm verdünnt. Dies ergibt sich daraus, dass zum einen das zugeführte Wasser über den gesamten Umfang verteilt wird und zum anderen aufgrund der Abrisskanten der einzelnen Kaskadenstufen ein dünner Film erzeugt wird.

Vorteilhafterweise weist jede Kaskadestufe ein Becken auf, in das das Wasser von der oberen Stufe hineinfließt und sich dort sammelt. Erst wenn das Becken vollständig gefüllt ist, fließt das Wasser über eine der Lichtquelle zugewandte Frontwand hinüber und weiter nach unten in das Becken der darunterliegenden nächsten Kaskadenstufe. Die Becken führen dazu, dass der Fluss des Wassers deutlich verlangsamt wird und somit das Wasser dem ultravioletten Licht länger ausgesetzt ist.

Vorteilhafterweise können die einzelnen Kaskadenstufen schräg abfallend in Richtung der Lichtquelle ausgeführt sein, so dass gewährleistet ist, dass das Wasser aus dem Becken stets über die Frontwand weiter hinab läuft. Dies kann dann wichtig sein, wenn das Gehäuse, in dem sich die Wasserführung befindet, auf unebenem Untergrund aufgestellt wird. Würden die Kaskadenstufen waagerecht verlaufen, wäre es notwendig, die gesamte Anlage in der Horizontalen sehr genau auszurichten. Bei schräg verlaufenden Kaskadenstufen kann eine gewisse Fehlstellung aus der Horizontalen heraus in Kauf genommen werden.

In einer besonders vorteilhaften Ausführungsvariante ist das Becken, das durch eine Rückwand, einen Beckenboden und die genannte Frontwand gebildet ist, mit einer reflektierenden Beschichtung versehen. Dies führt dazu, dass das ausgesandte Licht reflektiert wird und somit von den jeweiligen reflektierenden Schichten zurück in das Wassers hineingeworfen wird. Auf diese Weise wird eine deutlich erhöhte Strahlungsintensität erreicht, was wiederum zu einer höheren Entkeimung führt.

Um zu verhindern, dass sich in Becken stehendes Wasser sammelt, kann der Boden eines Beckens eine kleine Öffnung, also ein Loch aufweisen, durch das ein geringer Anteil des im Becken befindlichen Wassers direkt in die darunter liegende Kaskadenstufe abgeleitet wird. Diese Öffnung befindet sich vorteilhafterweise an der tiefsten Stelle des Beckens, also dann, wenn das Becken in Richtung der Lichtquelle schräg abfallend ausgerichtet ist, im Bereich der Frontwand. Es hat sich gezeigt, dass es ausreicht, wenn durch die Öffnung etwa 1% des zufließenden Wassers abfließen kann. Auch hat es sich als vorteilhaft erwiesen, wenn die Öffnungen von untereinander angeordneten Kaskadenstufen nicht unmittelbar untereinander, sondern auf dem Umfang verteilt angeordnet sind. Dies führt dazu, dass das Wasser auch auf einer Kaskadenstufe stets in Bewegung bleibt.

Es hat sich gezeigt, dass eine UV-Lampe besonders geeignet ist, die Licht in Wellenlängenbereich von 240-280 nm, vorzugsweise mit einer Hauptquelle von 265 nm aussendet. Die Erfindung ist aber nicht auf diesen Wellenlängenbereich festgelegt, vielmehr bezieht sie sich auf alle geeigneten Wellenlängen.

Die erfindungsgemäße Wasseraufbereitungsanlage ist aus der erfindungsgemäßen Wasserfiltervorrichtung und der erfindungsgemäßen Wasseraufbereitungsvorrichtung gebildet, wobei weitere Wasserbehandlungsvorrichtungen vorgesehen sein können. Insbesondere hat es sich als vorteilhaft erwiesen, wenn sich Partikel aus dem Schmutzwasser zunächst in der Wasserfiltervorrichtung absetzen können, und das Schmutzwasser dann durch das Filterelement gefiltert wird. Es folgt zwischen der Wasserfiltervorrichtung und der Wasseraufbereitungsvorrichtung eine Ultraschallbeaufschlagung. Die Erzeugung von akustischen Feldern hoher Intensität in Flüssigkeiten führt zu Kavitationseffekten. Darunter versteht man das Entstehen, Wachsen und Oszillieren von Blasen, von denen die Schadstoffe mitgenommen werden. Durch diese Art der Schadstoffentfernung werden Zellwände von Bakterien aufgebrochen. Die Ultraschallwellenbeaufschlagung ist ein sehr wirkungsvolles Mittel gegen Legionellen. Viele Legionellen verbergen sich in Schutzräumen, wie z.B. Amöben oder Hartmanellen. Ultraschallwellen öffnen diese Schutzräume und setzen somit die Legionellen für die folgende UV-Bestrahlung frei. Durch das UV-Licht werden die nun freiliegenden Legionellen danach in der erfindungsgemäßen Wasseraufbereitungsvorrichtung sicher abgetötet.

Nach Durchströmen der Wasseraufbereitungsvorrichtung können sich vorteilhafterweise eine biologische Reinigung, z.B. unter Zuführung von Sauerstoff und ein Steinfilter anschließen. Anschließend kann eine Feinfiltrierung in einer oder mehreren Feinfilterstufen erfolgen.

Die gesamte Wasseraufbereitungsanlage kann sehr kompakt gebaut sein. Sowohl die Wasserfiltervorrichtung, als auch die Wasseraufbereitungsvorrichtung sind vorteilhafterweise in röhrenförmigen Gehäusen untergebracht. Auch die anschließende biologische Reinigung und auch die Feinfilter können in Rohren untergebracht sein. Somit ist es möglich, Standardrohre zu verwenden und die gesamte Anlage in nahezu jeder beliebigen Größe zu fertigen. Als besonders vorteilhaft hat es sich erwiesen, dass eine Anlage mit einem Durchsatz von bis zu 3 m³/h. einschl. aller genannten Aufbereitungsstufen auf einer Europalette untergebracht werden kann.

Die Erfindung wird im Folgenden anhand der nachfolgenden Figuren näher erläutert. Es zeigen:
- Fig. 1:: ein erfindungsgemäßes Filterelement im Schnitt
- Fig. 2:: eine erfindungsgemäße Wasserfiltervorrichtung in einer Prinzipdarstellung im Schnitt,
- Fig. 3:: eine erfindungsgemäße Wasseraufbereitungsvorrichtung in einer Prinzipdarstellung im Schnitt,
- Fig. 4:: eine erfindungsgemäße Wasseraufbereitungsanlage mit einer Wasserfiltervorrichtung und einer Wasseraufbereitungsvorrichtung entsprechend der Figuren 1 und 2, im Schnitt.

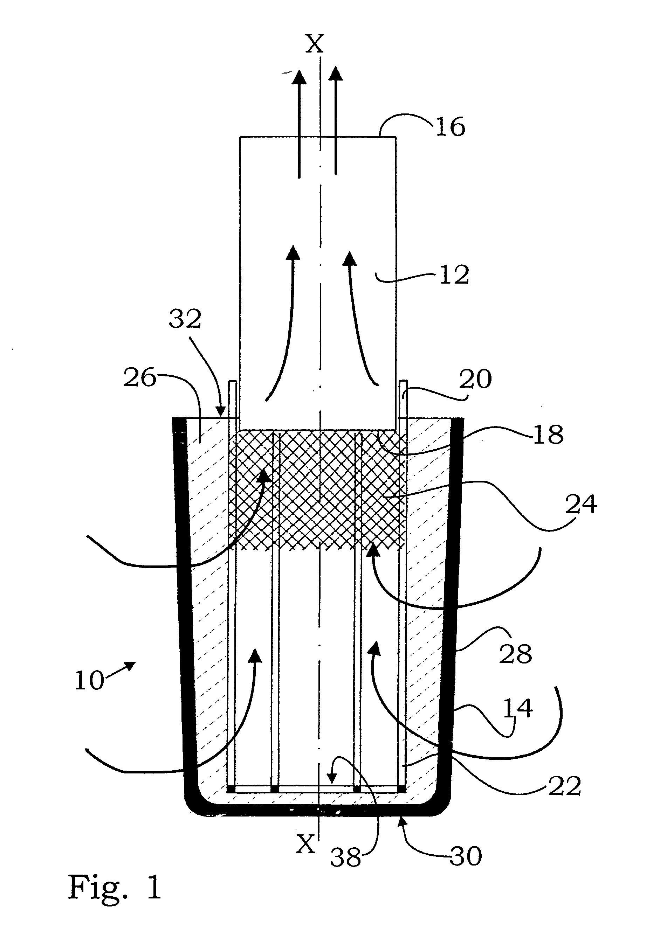

Gemäß Fig. 1 weist ein erfindungsgemäßes Filterelement 10 ein Rohr 12 und einen Filterkörper 14 auf. Das Rohr 12 und der Filterkörper 14 sind vorzugsweise zylinderförmig und konzentrisch um eine Längsachse X-X angeordnet. Das Rohr 12 weist ein freies Ende 16 und ein filterkörperseitiges Ende 18 auf. An dem filterkörperseitigen Ende 18 ist ein Tragegerüst 20 befestigt. Dieses kann aus Stäben 22 gebildet sein, die von einer Netzstruktur überzogen sind. Als Netzstruktur kann beispielsweise ein Gitternetz 24, aber auch ein Strumpf vorgesehen sein. Innerhalb des Tragegerüstes 20 ist ein Hohlraum ausgebildet.

Das Tragegerüst 20 ist von einer Grundschicht 26 umgeben, die mit dem Tragegerüst 20 verbunden ist. Um die Grundschicht 26 ist wiederum eine Außenschicht 28 angeordnet, die mit der Grundschicht verbunden ist. Sowohl die Grundschicht 26 als auch die Außenschicht 28 können Epoxydharz als Binde- und Verbindungsmittel aufweisen. Anstellen von Epoxydharz kann jedes andere geeignete Klebe- oder Bindemittel verwendet werden, es ist jedoch darauf zu achten, dass dieses keine Giftstoffe absondern darf.

Der Filterkörper 14 weist eine Stirnfläche 30 und eine Rückseite 32 auf. Die Rückseite 32 ist im vorliegenden Ausführungsbeispiel nicht von der Außenschicht 28 bedeckt, die Rückseite 32 kann entweder undurchlässig oder aber auch mit der Außenschicht 28 bedeckt sein.

Der Filterkörper 14 weist eine leicht konische Form auf, um ihn bei der Herstellung-leichter aus seiner Form entfernen zu können.

Die Stäbe 22 sind vorteilhafterweise durch Querstäbe 34 an den dem Rohr 12 abgewandten Enden miteinander verbunden.

Das Gitternetz 24 ist in Figur 1 nur teilweise dargestellt, es erstreckt sich über die gesamte Länge der Stäbe 22. Die Stäbe 22 treten im dargestellt Ausführungsbeispiel aus der Rückseite 32 des Filterkörpers 14 hervor, auch dies ist nur beispielhaft zu verstehen, auch andere Befestigungsmöglichkeiten für den Filterkörper sind denkbar.

Die dargestellten Pfeile verdeutlichen, dass die Flüssigkeit von außen allseitig durch die Außenschicht 28 und die Grundschicht 26 in den Hohlraum des Tragegerüstes 20 eindringen und durch das Rohr 12 abgeleitet werden kann.

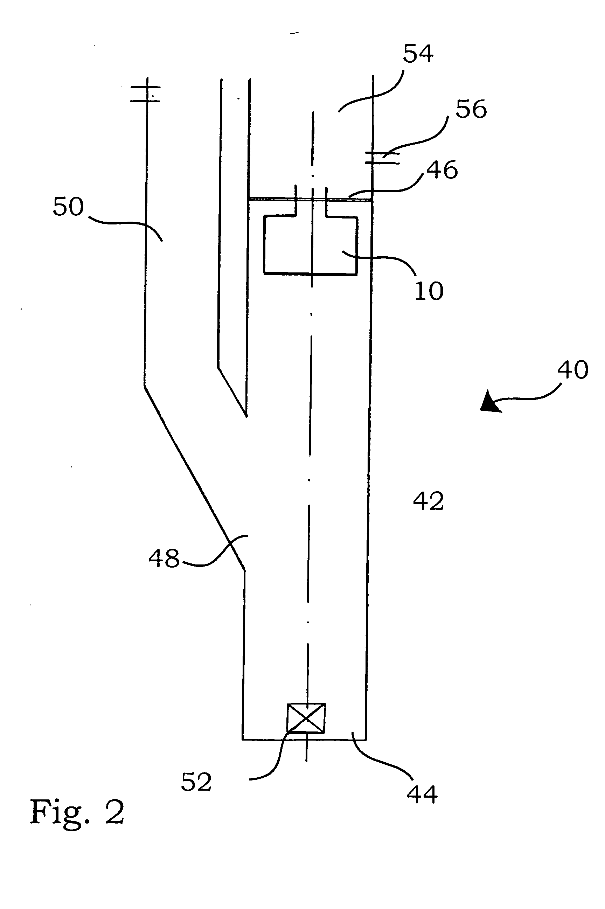

Figur 2 zeigt eine erfindungsgemäße Wasserfiltervorrichtung 40. Diese weist im vorliegenden Fall ein röhrenförmiges Gehäuse 42 mit einem Boden 44 und einem Deckel 46 auf. Der Deckel 46 dichtet das Gehäuse 42 wasserdicht nach oben hin ab. Im vorliegenden Fall ist das Gehäuse 42 zwar röhrenförmig ausgeführt, es kann jedoch auch jeden anderen beliebigen Querschnitt aufweisen.

Im Bereich des Bodens 44 befindet sich ein Zulauf 48, durch den Schmutzwasser in das Gehäuse 42 gelangen kann. An dem Zulauf 48 endet im vorliegenden Fall eine Leitung 50, die sich im Wesentlichen parallel zum Gehäuse 42 erstreckt. Schmutzwasser wird mit Hilfe einer Pumpe auf ein Niveau oberhalb des Deckels 46 gepumpt, dort in die Leitung 50 eingeleitet, um dann durch den Zulauf 48 in das Gehäuse 42 zu gelangen. Die in der Leitung 50 stehende Wassersäule drückt auf das in dem Gehäuse 46 befindliche Wasser, wodurch dieses langsam durch das Filterelement 10 aufsteigt.

Im Bereich des Bodens 44 ist ein Revisionsschacht 52 vorgesehen, durch den das Innere des Gehäuses 42 erreicht und gereinigt werden kann.

Oberhalb des Deckels 46 befindet sich eine Zwischenkammer 54, an die sich ein Ablauf 56 anschließt. Das durch das Filterelement 10 geströmte Wasser fließt durch den Ablauf 56 ab.

Es hat sich gezeigt, dass ein röhrenförmiges Gehäuse 42 mit einem Durchmesser von 200 mm und eine Leitung 50 mit einem Durchmesser von 150 mm geeignet sind, um einen Durchsatz von 1-3 m³/h zu erreichen.

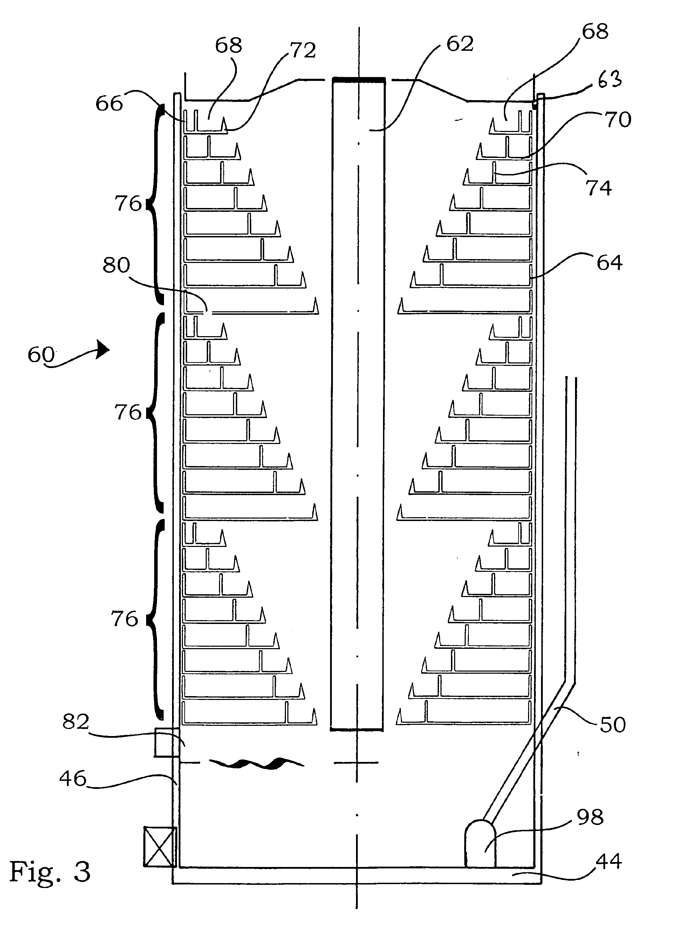

Figur 3 zeigt eine erfindungsgemäße Wasseraufbereitungsvorrichtung 60. Diese weist eine im Inneren aufrecht also vertikal stehende Lichtquelle 62 auf, die UV-Licht radial in alle Richtungen aussendet. Es hat sich gezeigt, dass besonders gute Wirkungen im Wellenlängenbereich zwischen 240 - 280 nm erreicht werden, wobei die Hauptwelle bei etwa 260 nm liegen sollte.

Im vorliegenden Ausführungsbeispiel ist die röhrenförmige Lichtquelle 62 in einem Gehäuse 42 angeordnet, das ebenfalls einen kreisförmigen Querschnitt aufweist, also ebenfalls röhrenförmig ausgeführt ist. An einer Innenwand 63 des Gehäuses 42 ist eine erfindungsgemäße kaskadenförmige Wasserführung 64 vorgesehen, die sich um die Lichtquelle 62 herum erstreckt. Die Wasserführung 64 ist vorzugsweise konzentrisch um die Lichtquelle 62 angeordnet.

Die Wasserführung 64 ist durch Kaskadenstufen 66 gebildet, die derart angeordnet sind, dass ihr Abstand zur Lichtquelle 62 von oben nach unten, also in Fließrichtung des Wassers stetig abnimmt. Das Wasser wird also auf eine oberste Kaskadenstufe 66 geleitet und fließt über deren Rand hinab auf die nächste Kaskadenstufe 66 usw.

Erfindungsgemäß weist jede Kaskadenstufe 66 vorteilhafterweise ein Stufenbecken 68 auf. Dieses ist durch einen Beckenboden 70, eine Frontwand 72 und eine Rückwand 74 gebildet. In diesem Stufenbecken 68 wird das Wasser zunächst gesammelt, bis es über die Frontwand 72 hinüber abwärts in das Stufenbecken 68 der darunterliegenden Kaskadenstufe 66 fließt.

Die Frontwand 72 verjüngt sich vorteilhafterweise in Richtung ihres freien Endes, so dass sich eine möglichst scharfe Abrisskante ergibt. Dies führt dazu, dass der an der Frontwand 72 auf der der Lichtquelle 62 zugewandten Seite hinablaufende Wasserfilm sehr dünn ist. Dies wiederum hat den Vorteil, dass das auftreffende UV-Licht Partikel im Wasser besser erreichen kann, da diese sich nicht gegenseitig abschatten.

Je nach Ausführung der Wasseraufbereitungsvorrichtung 60 bzw. je nach ihrer gewünschten Höhe kann es sinnvoll sein, mehrere Kaskadenabschnitte 76 vorzusehen, die aufeinander aufgestellt werden können. Diese sind entweder durch Verschweißen, Verkleben, Verschrauben, Vernieten o.ä. miteinander verbindbar, es kann jedoch auch vorteilhaft sein, wenn diese lediglich aufeinander gestellt werden. Es muss nicht unbedingt notwendig sein, die Kaskadenabschnitte 76 fest miteinander zu verbinden.

Das sich in einer untersten Kaskadenstufe 66 befindliche Wasser fließt aufgrund eines entsprechend ausgeführten Beckenbodens 70 nicht in Richtung der Lichtquelle 62, sondern zurück in Richtung der Innenwand 63. Eine Rückwand 74 ist auf diesen untersten Kaskadenstufen 66 nicht vorgesehen.

Durch eine Öffnung 80 gelangt es dann in eine obere Kaskadenstufe 66 des darunter liegenden Kaskadenabschnitts 76.

Vorteilhafterweise können in den Beckenböden 70 Öffnungen 80 vorgesehen sein, die dazu führen, dass ein geringer Anteil des Wassers nicht über die Frontwand 72, sondern direkt durch die Öffnung 80 in das darunter liegende Stufenbecken 80 fließen kann. Dadurch wird verhindert, dass sich in den Stufenbecken 68 stehendes Wasser mit erhöhter Keimbelastung bildet.

Das Gehäuse 42 der Wasseraufbereitungsvorrichtung 60 kann vorteilhafterweise eine Überlauföffnung 82 aufweisen, durch die das Wasser dann austreten kann, wenn es durch einen Ablauf 56, der sich im Bereich eines Bodens 44 der Wasseraufbereitungsvorrichtung 60 befindet, nicht mehr abfließen kann.

Es hat sich gezeigt, dass eine besonders gute Wirkung des keimtötenden UV-Lichtes dann erreicht wird, wenn der Lichtquelle 62 zugewandte Flächen der Wasserführung 64 und/oder des Gehäuses 42 reflektierende Oberflächen aufweisen. Es hat sich gezeigt, dass dann, wenn die Frontwand 72, die Rückwand 74 und der Beckenboden 70 reflektierend beschichtet sind, der erreichbare Reinheitsgrad deutlich erhöht ist.

Weiterhin kann es vorteilhaft sein, wenn die Stufenbecken 68 beheizbar sind, insbesondere derart, dass das zu reinigende Wasser Temperaturen von über 60° erreicht, um somit die Keimtötung weiter zu unterstützen.

Die Stufenbecken 68 weisen vorteilhafterweise einen schräg geneigten Beckenboden 70 auf, der in Richtung der Lichtquelle 62 abfällt. Dadurch ist gewährleistet, dass das Wasser stets in Richtung der Lichtquelle 62 und über die Frontwand 72 strömen kann. Entsprechend sind die Öffnungen 80 in den Beckenböden 70 im Bereich der Frontwände 72 angeordnet.

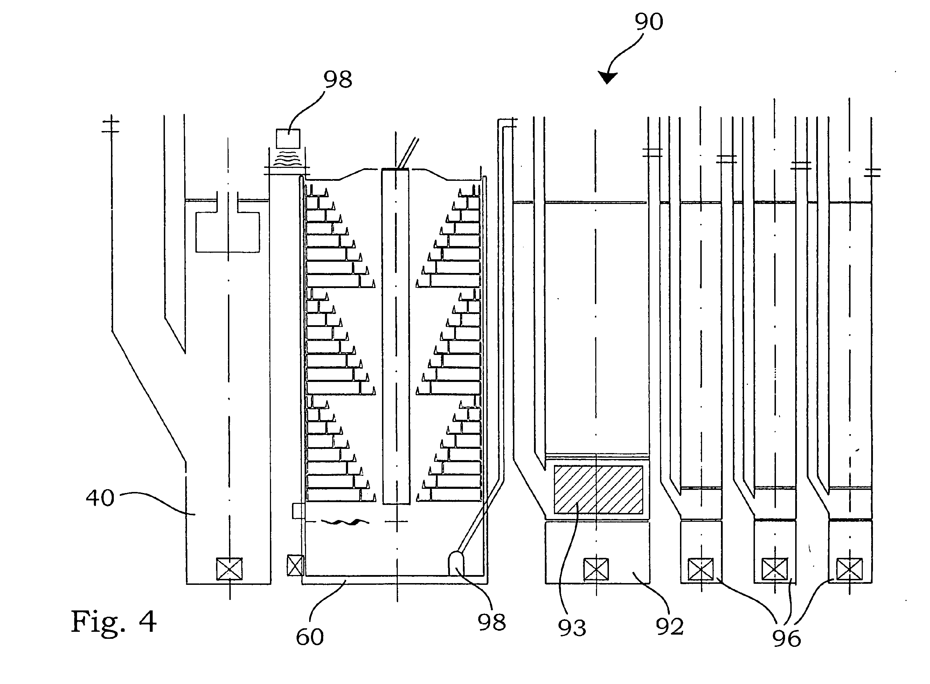

Figur 4 zeigt eine erfindungsgemäße Wasseraufbereitungsanlage 90, die eine erfindungsgemäße Wasserfiltervorrichtung 40 und eine erfindungsgemäße Wasseraufbereitungsvorrichtung 60 beinhaltet. Das Wasser fließt über den Ablauf 56 der Wasserfiltervorrichtung 40 in die Wasseraufbereitungsvorrichtung 60 hinein, wobei es vorteilhafterweise mittels einer Ultraschallquelle 98 mit Ultraschall beaufschlagt wird.

Nach Durchströmen der Wasseraufbereitungsvorrichtung 60 gelangt es dann über eine Leitung 50 in einen Zulauf 48 einer sich anschließenden biologischen Reinigungsvorrichtung 92. Diese weist beispielsweise einen Steinfilter 91 mit einer Korngröße von 5 - 8 mm und eine Luft bzw. Sauerstoffzufuhr auf.

Die Leitung 50 der Wasseraufbereitungsvorrichtung 60 erstreckt sich vorteilhafterweise parallel zum Gehäuse 42 der Wasseraufbereitungsvorrichtung 60 bis in eine Höhe oberhalb der obersten Kaskadenstufe 66 und ist dort mit einer Fall-Leitung 94 verbunden. Dies bewirkt, dass das in der biologischen Reinigungsvorrichtung 92 befindliche Wasser entsprechend der Wasserfiltervorrichtung 40 nach oben gedrückt wird. An die biologische Reinigungsvorrichtung 92 können sich dann vorzugsweise ein oder mehrere Feinfilterstufen 96 anschließen, die über Leitungen 50 miteinander verbunden sind.

In der Wasseraufbereitungsvorrichtung 60 ist eine Tauchpumpe 98 angeordnet, die das Wasser in die entsprechende Höhe pumpt.

Es hat sich gezeigt, dass für den genannten Durchsatz von 1-3 m³/h die biologische Reinigungsvorrichtung 92 einen Durchmesser von 300 mm und die Feinfilterstufen 96 einen Durchmesser von 150 mm aufweisen kann. Die Gehäuse 42 der biologischen Reinigungsvorrichtung 92 und der Feinfilterstufen 96 sind vorzugsweise ebenfalls kreisförmig ausgeführt.

Die gesamte Wasseraufbereitungsanlage 90 kann derart ausgeführt sein, dass sie problemlos auf einer Europalette transportierbar ist. Es hat sich aber auch gezeigt, dass die gesamte Wasseraufbereitungsanlage 90 derart klein ausgeführt sein kann, dass sie bequem als Küchengerät, beispielsweise in der Größe einer Mikrowelle, einsetzbar ist. Je nach Auswahl geeigneter Materialien, kann sie auch derart leicht ausgeführt sein, dass sie in Koffergröße in entsprechenden Regionen mitgeführt werden kann. Die Abmessung kann in jeder Richtung weniger als Im betragen.

Die erfindungsgemäße Wasseraufbereitungsanlage benötigt ausgesprochen wenig Energie. Die Lichtquelle 62 benötigt 60 W, die genannten Pumpen etwa 50 W und die Ultraschallquelle 98 etwa xy W. Die gesamte Energie kann entweder durch Ausnutzung von Sonnenenergie, durch Muskelkraft, beispielsweise durch Antreiben eines Dynamos, oder durch Ausnutzung von Strömungsenergie der genutzten Wasserquelle gedeckt werden.

Um einen problemlosen Betrieb der Wasseraufbereitungsanlage 90 bzw. der Wasseraufbereitungsvorrichtung 60 zu gewährleisten, kann es je nach Ausführung notwendig sein, dass die jeweiligen Geräte in der Horizontalen ausgerichtet sind. Dies kann mit Hilfe entsprechender Messgeräte erreicht werden, wobei höhenverstellbare Füße vorgesehen sein können. Auch ist es möglich, die gesamte Wasseraufbereitungsanlage oder auch nur die Wasseraufbereitungsvorrichtung an einer Art Galgen zentral aufzuhängen.

Alle Komponenten der Wasseraufbereitungsanlage 90 sind äußerst einfach zu bedienen und weisen aufgrund der wenigen bewegten Teile eine sehr lange Lebensdauer auf. Somit eignet sich die Wasseraufbereitungsanlage 90 hervorragend für einen Einsatz in Gebieten, in denen langfristig Wasserknappheit vorherrscht, und in denen Fachpersonal nicht ohne weiteres verfügbar ist.

## Patentansprüche

1. Wasseraufbereitungsvorrichtung (60) bestehend aus:
- einer Lichtquelle (62), die ultraviolettes Licht aussendet,
- einer kaskadenförmigen Wasserführung (64), die derart angeordnet ist, dass über die Wasserführung geleitetes Wasser mit von der Lichtquelle (62) ausgesendetem Licht bestrahlt wird,
wobei die Dosierung und Wellenlänge der UV-Strahlung und die Anordnung der Lichtquelle zur Wasserführung derart ausgewählt sind, dass Mikroorganismen im Wasser abgetötet werden.

2. Wasseraufbereitungsvorrichtung (60) nach Anspruch 1, **dadurch gekennzeichnet, dass** die Lichtquelle (62) derart ausgeführt ist, dass sie UV-Licht in radialer Richtung allseitig abstrahlt und derart angeordnet ist, dass ihre Längsachse in vertikaler Richtung verläuft, und dass die kaskadenförmige Wasserführung (64) konzentrisch um die Lichtquelle (62) herum angeordnet ist, so dass Wasser von oben über Kaskadenstufen (66) nach unten entlang der Längsrichtung der Lichtquelle (62) fließt und dabei ständig mit UV-Licht bestrahlt wird.

3. Wasseraufbereitungsvorrichtung (60) nach Anspruch 2, **dadurch gekennzeichnet, dass** mehrere Kaskadenabschnitte (76) vorgesehen sind, die in Längsrichtung der Lichtquelle (62) untereinander angeordnet sind, wobei innerhalb jeden Kaskadenabschnitts (76) der Abstand der jeweiligen Kaskadenstufen (66) in Fließrichtung des Wassers zur Lichtquelle (62) abnimmt, wobei das Wasser aus der Kaskadenstufe (66) mit geringsten Abstand zur Lichtquelle (62) in die Kaskadenstufe (66) des nächsten Kaskadenabschnitts (76) fließt, die in diesem Kaskadenabschnitt (76) den größten Abstand zur Lichtquelle (62) aufweist.

4. Wasseraufbereitungsvorrichtung (60) nach einem der Ansprüche 1 bis 3, **dadurch gekennzeichnet, dass** jede Kaskadenstufe (66) ein Stufenbecken (68) aufweist, dass aus einem Beckenboden (70), einer Frontwand (72) und einer Rückwand (74) gebildet ist, in dem sich Wasser sammelt, um dann, wenn das Stufenbecken (68) gefüllt ist, über die der Lichtquelle (62) zugewandte Frontwand (72) nach unten in das Stufenbecken (68) der darunterliegenden Kaskadenstufe (66) zu fließen.

5. Wasseraufbereitungsvorrichtung (60) nach Anspruch 4, **dadurch gekennzeichnet, dass** im Beckenboden (70) der Stufenbecken (68) eine Öffnung (80) vorgesehen ist, durch das ein geringer Anteil des im Stufenbecken (68) gesammelten Wassers stetig in das darunterliegende Stufenbecken (68) abfließen kann.

6. Wasseraufbereitungsvorrichtung (60) nach einem der Ansprüche 1 bis 5, **dadurch gekennzeichnet, dass** der Lichtquelle (62) zugewandte Flächen zumindest bereichsweise eine reflektierende Oberfläche aufweisen.

7. Wasseraufbereitungsvorrichtung (60) nach Anspruch 6, **dadurch gekennzeichnet, dass** das Stufenbecken (68) und die der Lichtquelle (62) zugewandte Seite der Frontwand (72) eine reflektierende Oberfläche aufweisen.

8. Wasseraufbereitungsvorrichtung (60) nach einem der Ansprüche 2-7, **dadurch gekennzeichnet, dass** die Kaskadenstufen (66) und/oder der Beckenboden (70) schräg abfallend in Richtung der Lichtquelle (62) ausgeführt ist.

9. Wasserfiltervorrichtung (40) für eine Wasseraufbereitungsanlage mit:
a) einem Gehäuse (42) mit einem Boden (44), einem Deckel (46) und einen im Bereich des Bodens (46) angeordneten Zulaufs (48),
b) einem länglichen Filterelement (10) für das Zurückhalten von Grobstoffen in dem Gehäuse (42), mit
a. einem Rohr (12), das verbunden ist mit
i. einem hohlen Filterkörper (14), der gebildet ist aus:
ii. einem innen angeordneten, einen Hohlraum ausbildenden und mit innen angeordneten, einen Hohlraum ausbildenden und mit dem Rohr (12) verbundenen Tragegerüst (20),
iii. einer Grundschicht (26) aus relativ grobkörnigem Material, dass das Tragegerüst (20) umgibt und mit diesem verbunden ist,
iv. einer Außenschicht (28) aus relativ feinkörnigem Material, das die Grundschicht (26) umgibt und mit dieser verbunden ist, so dass die Flüssigkeit von außen in den Filterkörper (14) und dann durch das Rohr (12) abfließen kann, wobei sich das Rohr (12) durch eine Öffnung im Deckel (46) erstreckt,
v. einen Ablauf oberhalb des Deckels (46) derart, dass Schmutzwasser über den Zulauf in das Gehäuse (42) eingeleitet werden kann, sich dann Schwebstoffe auf dem Boden absetzen können und das Wasser anschließend durch das Filterelement (10) zum Ablauf aufsteigen kann.

10. Wasserfiltervorrichtung (40) nach Anspruch 9, **dadurch gekennzeichnet, dass** der Zulauf (48) mit einer Leitung (50) verbunden ist, die sich in etwa parallel zum Gehäuse (42) in vertikaler Richtung erstreckt, so dass über die Leitung (50) eingespeistes Schmutzwasser bereits im Gehäuse (42) befindliches Wasser in Richtung des Filterelementes (10) drückt.

11. Wasserfiltervorrichtung (40) nach Anspruch 10, **dadurch gekennzeichnet, dass** eine Pumpe das Schmutzwasser auf ein Niveau oberhalb des Filterelementes (10) pumpt, und das Wasser dort in die Leitung (50) eingespeist wird.

12. Wasserfiltervorrichtung (40) nach einem der Ansprüche 9-11, **dadurch gekennzeichnet, dass** die Grundschicht (26) des Filterelementes (10) eine Körnung 5 bis 8 mm und die Außenschicht 28 eine Körnung von 0,3 bis 1,3 mm aufweist.

13. Wasseraufbereitungsanlage (90), mit
c) einer Wasserfiltervorrichtung (40) nach einem der Ansprüche 1-8,
d) einer Wasseraufbereitungsvorrichtung (60) nach einem der Ansprüche 9-12,
wobei Schmutzwasser zunächst in die Wasserfiltervorrichtung (40) und dann in die Wasseraufbereitungsvorrichtung (60) fließt.

14. Wasseraufbereitungsanlage (90) nach Anspruch 13, **dadurch gekennzeichnet, dass** zwischen der Wasserfiltervorrichtung (40) und der Wasseraufbereitungsvorrichtung (60) eine Ultraschallquelle (98) zur Beaufschlagung des Wassers mit Ultraschall vorgesehen ist.

15. Wasseraufbereitungsanlage (90) nach einem der Ansprüche 13 oder 14, **dadurch gekennzeichnet, dass** sich an die Wasseraufbereitungsvorrichtung (60) eine biologische Reinigungsvorrichtung (92) anschließt, in die das von der Wasseraufbereitungsvorrichtung (60) kommende Wasser geleitet wird.

16. Wasseraufbereitungsanlage (90) nach einem der Ansprüche 13 bis 15, **dadurch gekennzeichnet, dass** sich an die Wasseraufbereitungsvorrichtung (60) mindestens eine Feinfilterstufe (96) anschließt, in die das Wasser von der Wasseraufbereitungsvorrichtung (60) kommend geleitet wird.

17. Wasseraufbereitungsanlage (90) nach einem der Ansprüche 13 bis 16, **dadurch gekennzeichnet, dass** die Dimensionen der einzelnen Bauteile derart ausgewählt sind, dass die gesamte Wasseraufbereitungsanlage (90) auf einer Europalette transportierbar ist.

18. Wasseraufbereitungsanlage (90) nach einem der Ansprüche 13 bis 17 **dadurch gekennzeichnet, dass** die gesamte Wasseraufbereitungsanlage (90) in jeder Richtung Abmessungen aufweist, die weniger als 1 m betragen.
